# EUROPEAN PATENT APPLICATION

(11) **EP 4 783 253 A1**
(43) Date of publication of application: **29.07.2026**
(21) Application number: 24868256.9
(22) Date of filing: 17.09.2024
(51) Int. Cl.: H01M 4/36, H01M 4/525, H01M 10/0569

(54) **COATED ACTIVE MATERIAL, ELECTRODE, BATTERY, AND METHOD FOR PRODUCING COATED ACTIVE MATERIAL**

(30) Priority: 20.09.2023 JP 2023152035
(71) Applicant: PANASONIC INTELLECTUAL PROPERTY MANAGEMENT CO., LTD., Kadoma-shi, Osaka 571-0057 (JP)
(72) Inventor: MASUMOTO, Yui, Kadoma-shi, Osaka 571-0057 (JP); TSUJITA, Takuji, Kadoma-shi, Osaka 571-0057 (JP); SAKAI, Akihiro, Kadoma-shi, Osaka 571-0057 (JP); TAKEZAWA, Hideharu, Kadoma-shi, Osaka 571-0057 (JP)
(74) Representative: Eisenführ Speiser
(86) International application number: PCT/JP2024/033149
(87) International publication number: WO 2025/063179

(57) **Abstract**

A coated active material 130 of the present disclosure includes an active material 110 and a coating layer 120 coating at least a portion of a surface of the active material 110. The coating layer 120 includes a first layer 111 including a first solid electrolyte and a second layer 112 including a second solid electrolyte. A first layer 111 is positioned between the second layer 112 and the active material 110. The first solid electrolyte contains Ti and F, and the second solid electrolyte contains Ti, F, and O. A proportion of a Ti-O bond in a group of bonds to Ti contained in the second solid electrolyte is higher than a proportion of the Ti-O bond in the group of bonds to Ti contained in the first solid electrolyte.

## Description

### TECHNICAL FIELD

The present disclosure relates to a coated active material, an electrode, a battery, and a method for manufacturing a coated active material.

### BACKGROUND ART

It is known that coating an active material with a solid electrolyte improves durability of a battery. For example, a fluoride solid electrolyte disclosed in Patent Literature 1 exhibits high ionic conductivity and provides favorable output characteristics to a battery.

### CITATION LIST

### Patent Literature

Patent Literature 1: WO 2021/186809 A1

### SUMMARY OF INVENTION

### Technical Problem

The solid electrolyte described in Patent Literature 1 exhibits reactivity to oxygen. Therefore, in a case where a solvent with a high oxygen content is used for the electrolytic solution, the solid electrolyte can react with the electrolytic solution during charge and discharge of the battery. If the solid electrolyte coating the active material reacts with the electrolytic solution, the battery resistance increases to degrade the output characteristics. Therefore, there has been demand for a material resistant to deterioration during charge and discharge of a battery.

### Solution to Problem

The present disclosure provides a coated active material including:
an active material; and
a coating layer coating at least a portion of a surface of the active material, wherein
the coating layer includes a first layer including a first solid electrolyte and a second layer including a second solid electrolyte,
the first layer is positioned between the second layer and the active material,
the first solid electrolyte contains Li, Ti, and F,
the second solid electrolyte contains Li, Ti, F, and O, and
a proportion of a Ti-O bond in a group of bonds to Ti contained in the second solid electrolyte is higher than a proportion of the Ti-O bond in the group of bonds to Ti contained in the first solid electrolyte.

### Advantageous Effects of Invention

The coated active material of the present disclosure is resistant to deterioration during charge and discharge of a battery, and is capable of improving output characteristics of the battery.

### BRIEF DESCRIPTION OF DRAWINGS

FIG. 1 is a cross-sectional view showing a schematic configuration of a coated active material according to Embodiment 1 of the present disclosure.
FIG. 2 is a flow chart showing a method for manufacturing a coated active material.
FIG. 3 is a schematic cross-sectional view of a lithium secondary battery according to Embodiment 2 of the present disclosure.
FIG. 4 shows XPS spectra of outermost surfaces of coated active materials in Example 1 and Comparative Example 1.
FIG. 5 shows an XPS spectrum of LTAF immediately after synthesis and an XPS spectrum of LTAF after 7 days of atmospheric exposure, the LTAF being used for production of a coated active material.

### DESCRIPTION OF EMBODIMENTS

Embodiments of the present disclosure will now be described with reference to the attached drawings. The present disclosure is not limited to the following embodiments.

### (Embodiment 1)

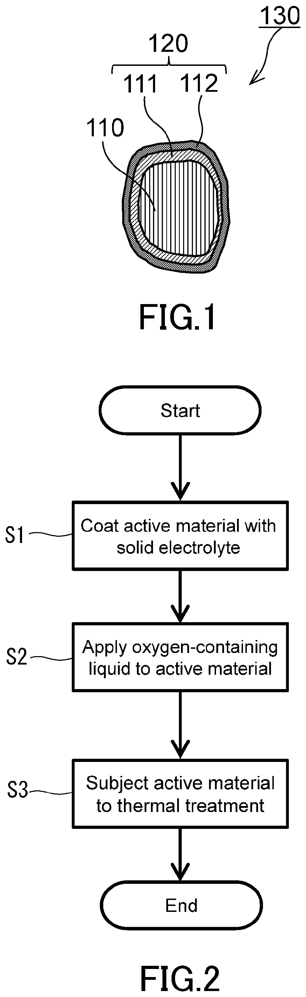

FIG. 1 is a cross-sectional view showing a schematic configuration of a coated active material according to Embodiment 1 of the present disclosure. A coated active material 130 includes an active material 110 and a coating layer 120. The active material 110 has a shape of a particle, for example. The coating layer 120 coats at least a portion of a surface of the active material 110. The coating layer 120 includes a first layer 111 and a second layer 112. The first layer 111 is positioned between the second layer 112 and the active material 110. The first layer 111 is a layer including a first solid electrolyte. The second layer 112 is a layer including a second solid electrolyte.

The first solid electrolyte is a solid electrolyte containing Li, Ti, and F. The second solid electrolyte is a solid electrolyte containing Li, Ti, F, and O. A proportion of a Ti-O bond in a group of bonds to Ti contained in the second solid electrolyte is higher than a proportion of a Ti-O bond in the group of bonds to Ti contained in the first solid electrolyte.

The first solid electrolyte and the second solid electrolyte are fluoride solid electrolytes, having a high oxidation resistance because of the high electronegativity of fluorine. Coating the active material 110 with the coating layer 120 may prevent direct contact between the active material 110 and the electrolytic solution. Specifically, according to the present embodiment, the second solid electrolyte included in the second layer 112 includes more Ti-O bonds in comparison with the first solid electrolyte included in the first layer 111. That is, at the surface portion of the coating layer 120, the proportion of Ti atoms bonded to oxygen atoms is relatively high. The high content of Ti-O bond suppresses the activity of the second solid electrolyte with respect to the electrolytic solution. Therefore, even in the case where the electrolytic solution includes a solvent or the like with a high proportion of oxygen, the coating layer 120 is resistant to deterioration during charge and discharge of the battery. As a result, the output characteristics of a battery using the coated active material 130 are improved. In particular, retention of discharge capacity at a high rate is improved.

The group of bonds to Ti refers to a group of anion bonds to Ti. Titanium (Ti), fluorine (F), and oxygen (O) typically form compounds such as TiF₄, TiOF₂, and TiO₂. Therefore, the group of bonds to Ti are represented by a Ti-F bond, a Ti-O-F bond, and a Ti-O bond. By adjusting the proportion of the Ti-O bond in the group of bonds, a coated active material 130 with a coating layer 120 resistant to deterioration can be obtained.

The respective proportions of the Ti-F bond, the Ti-O-F bond, and the Ti-O bond can be calculated by the following method. First, X-ray photoelectron spectroscopy (XPS) measurement of the coated active material 130 is performed. The Ti2p spectrum observed in the binding energy range from 448 eV to 486 eV is divided to separate the respective peaks of TiF₄, TiOF₂, and TiO₂. The peak for the TiF₄ is a peak around 462.0 eV. The peak for the TiOF₂ is a peak around 460.2 eV. The peak for the TiO₂ is a peak around 458.3 eV. A proportion of the area of the peak attributed to TiF₄ to a sum of the areas of the separated peaks is calculated as the proportion of a Ti-F bond (unit: %). A proportion of the area of the peak attributed to TiOF₂ to a sum of the areas of the separated peaks is calculated as the proportion of a Ti-O-F bond (unit: %). A proportion of the area of the peak attributed to TiO₂ to a sum of the areas of the separated peaks is calculated as the proportion of a Ti-O bond (unit: %).

By performing the XPS measurements for the coated active material 130 without special processing, a proportion of each bond in the second solid electrolyte can be determined. By removing a portion of the coating layer 120 by sputtering and then performing the XPS measurement, a proportion of each bond in the first solid electrolyte can be determined.

In the second solid electrolyte included in the second layer 112, the proportion of the Ti-O bond is, for example, higher than 5%. In other words, the sum of the proportion of the Ti-F bond and the proportion of the Ti-O-F bond is less than 95%. By increasing the proportion of the Ti-O bond in the second solid electrolyte to be higher than 5%, a coated active material 130 with a coating layer 120 resistant to deterioration is obtained.

The proportion of the Ti-O bond in the second solid electrolyte may be 40% or more, 50% or more, or 80% or more. In other words, a sum of the proportion of the Ti-F bond and the proportion of the Ti-O-F bond may be 60% or less, 50% or less, or 20% or less. By sufficiently increasing the proportion of the Ti-O bond in the second solid electrolyte, the effect of suppressing deterioration of the coating layer 120 is improved.

The upper limit of the proportion of the Ti-O bond in the second solid electrolyte is not particularly limited, and is, for example, 95%.

In the first solid electrolyte included in the first layer 111, the sum of the proportion of the Ti-F bond and the proportion of the Ti-O-F bond is, for example, 63% or more. In other words, the proportion of Ti-O bond is 37% or less. In the first solid electrolyte, a large sum of the proportion of the Ti-F bond and the proportion of the Ti-O-F bond means a low proportion of Ti atoms bonded to oxygen atoms. With this configuration, the coating layer 120 tends to exhibit high ion conductivity.

The sum of the proportion of the Ti-F bond and the proportion of the Ti-O-F bond in the first solid electrolyte may be 85% or more. In other words, the proportion of the Ti-O bond may be 15% or less. By increasing the sum of the proportion of the Ti-F bond and the proportion of the Ti-O-F bond, the coating layer 120 tends to exhibit high ion conductivity.

The upper limit of the sum of the proportion of the Ti-F bond and the proportion of the Ti-O-F bond in the first solid electrolyte is not particularly limited, and is, for example, 98%.

In the present embodiment, the second layer 112 is the layer including the outermost surface of the coated active material 130. That is, at least a portion of the outermost surface of the coated active material 130 is formed with the second layer 112. With this configuration, it is possible to effectively suppress deterioration of the coating layer 120, the deterioration being caused by a reaction with an electrolytic solution during charge and discharge of a battery.

In the present embodiment, the first layer 111 is a layer present in a region distanced by at least 1 nm from the outermost surface of the coated active material 130. This configuration effectively suppresses deterioration of the coating layer 120, the deterioration being caused by a reaction with the electrolytic solution during charge and discharge of a battery. The thickness of the second layer 112 can be 1 nm or more. Alternatively, the thickness of the second layer 112 may be less than 1 nm.

The aforementioned relation between the first solid electrolyte included in the first layer 111 and the second solid electrolyte included in the second layer 112 may also hold true for the relation between the outermost surface of the coated active material 130 and an intermediate position in the thickness direction of the coating layer 120. That is, a proportion of a Ti-O bond in a group of bonds to Ti contained in the outermost surface of the coated active material 130 is higher than the proportion of a Ti-O bond in a group of bonds to Ti contained in the coating layer 120 at the intermediate position between the outermost surface of the coated active material 130 and the surface of the active material 110. The proportion of the Ti-O bond in the group of bonds to Ti contained in the outermost surface of the coated active material 130 is equal to the proportion of a Ti-O bond in the group of bonds to Ti contained in the second solid electrolyte. The proportion of the Ti-O bond in the group of bonds to Ti contained in the coating layer 120 at the intermediate position between the outermost surface of the coated active material 130 and the surface of the active material 110 is equal to a proportion of the Ti-O bond in the group of bonds to Ti contained in the first solid electrolyte.

The coating layer 120 may have a portion closer to the outermost surface and a portion constituting an interface between the coating layer and the active material, with reference to the intermediate position in the thickness direction. The proportion of the Ti-O bond in the group of bonds to Ti contained in the portion closer to the outermost surface may be higher than the proportion of the Ti-O bond in the group of bonds to Ti contained in the portion constituting the interface. This configuration makes the coating layer 120 more resistant to deterioration during charge and discharge of a battery.

In the structure shown in FIG. 1, the portion closer to the outermost surface may correspond to the second layer 112, and the portion constituting the interface between the coating layer 120 and the active material 110 may correspond to the first layer 111.

At the outermost surface of the coated active material 130, the proportion of the Ti-O bond is, for example, higher than 5%. In other words, a sum of the proportion of the Ti-F bond and the proportion of the Ti-O-F bond is less than 95%. By increasing the proportion of the Ti-O bond at the outermost surface to be higher than 5%, a coated active material 130 with a coating layer 120 that is resistant to deterioration is obtained.

At the outermost surface of the coated active material 130, the proportion of the Ti-O bond may be 40% or more, 50% or more, or 80% or more. In other words, the sum of the proportion of the Ti-F bond and the proportion of the Ti-O-F bond may be 60% or less, 50% or less, or 20% or less. By sufficiently increasing the proportion of the Ti-O bond at the outermost surface, the effect of suppressing deterioration of the coating layer 120 is improved.

The upper limit of the proportion of the Ti-O bond at the outermost surface is not particularly limited and may be, for example, 95%.

At the intermediate position of the coating layer 120, the sum of the proportion of the Ti-F bond and the proportion of the Ti-O-F bond is, for example, 63% or more. In other words, the proportion of the Ti-O bonds is 37% or less. A large sum of the proportion of the Ti-F bond and the proportion of the Ti-O-F bond means a low proportion of Ti atoms bonded to oxygen atoms. With this configuration, the coating layer 120 tends to exhibit a high ion conductivity.

At the intermediate position of the coating layer 120, the sum of the proportion of the Ti-F bond and the proportion of the Ti-O-F bond may be 85% or more. In other words, the proportion of the Ti-O bond may be 15% or less. By increasing the sum of the proportion of the Ti-F bond and the proportion of the Ti-O-F bond, the coating layer 120 tends to exhibit high ion conductivity.

The upper limit of the sum of the proportion of the Ti-F bond and the proportion of the Ti-O-F bond at the intermediate position of the coating layer 120 is not particularly limited and is, for example, 98%.

The first solid electrolyte and the second solid electrolyte will now be described in detail.

The first solid electrolyte and the second solid electrolyte each possess lithium ion conductivity. The coated active material 130 is suitable for a lithium ion secondary battery.

The first solid electrolyte may consist essentially of Li, Ti, and F. Here, the sentence "the first solid electrolyte consists essentially of Li, Ti, and F" means that the molar ratio (i.e., molar fraction) of a sum of amounts of substance of Li, Ti, and F to a sum of amounts of substance of all elements constituting the first solid electrolyte is 90% or more. In one example, the molar ratio may be 95% or more. The first solid electrolyte may consist only of Li, Ti, and F.

The first solid electrolyte may further include at least one element selected from the group consisting of Ca, Mg, Al, Y, and Zr. The inclusion of these elements may improve the ionic conductivity of the first solid electrolyte. Al is desirable from the viewpoint of the cost and the ionic conductivity.

The first solid electrolyte may consist essentially of Li, Ti, M, and F. The M is at least one element selected from the group consisting of Ca, Mg, Al, Y, and Zr. Here, the sentence "the first solid electrolyte consists essentially of Li, Ti, M, and F" means that the molar ratio (i.e., molar fraction) of the total amount of Li, Ti, the M, and F to a sum of amounts of substance of all elements constituting the first solid electrolyte is 90% or more. In one example, the molar ratio may be 95% or more. The first solid electrolyte may consist only of Li, Ti, the M, and F.

The first solid electrolyte may contain elements that are unavoidably mixed in. Examples of the elements include hydrogen, oxygen and nitrogen. These elements may be present in the raw material powder of the first solid electrolyte or in the atmosphere for manufacturing or storing the first solid electrolyte.

To further increase the ionic conductivity of the first solid electrolyte, a ratio of an amount of substance of Li to a total amount of substance of Ti and M may be 1.7 or more and 4.2 or less.

The first solid electrolyte has a composition represented by the following formula (1), for example. In the formula (1), 0 ≤ x < 1 and 0 < b ≤ 2 are satisfied. In the case where the first solid electrolyte has a composition represented by the following formula (1), the first solid electrolyte exhibits favorable ionic conductivity.

Li_{6-(4-x)b}(Ti₁₋ₓMₓ)_{b}F₆ Formula (1)

To increase the ionic conductivity of the first solid electrolyte, 0.1 ≤ x ≤ 0.9 in the formula (1) may be satisfied.

To increase the ionic conductivity of the first solid electrolyte, 0.8 ≤ b ≤ 1.2 in the formula (1) may be satisfied.

The first solid electrolyte may have a crystalline phase. The first solid electrolyte may include an amorphous phase.

To increase the ionic conductivity, the first solid electrolyte may include an anion other than F. The anion other than F is at least one selected from the group consisting of Cl, Br, I, and Se.

The second solid electrolyte may consist essentially of Li, Ti, F, and O. Here, the sentence "the second solid electrolyte consists essentially of Li, Ti, F, and O" means that the molar ratio (i.e., molar fraction) of a sum of amounts of substance of Li, Ti, F, and O to a sum of amounts of substance of all elements constituting the second solid electrolyte is 90% or more. In one example, the molar ratio may be 95% or more. The second solid electrolyte may consist only of Li, Ti, F, and O.

The second solid electrolyte may further include at least one element selected from the group consisting of Ca, Mg, Al, Y, and Zr. The inclusion of these elements may improve the ionic conductivity of the second solid electrolyte. Al is desirable from the viewpoint of the cost and the ionic conductivity.

The second solid electrolyte may consist essentially of Li, Ti, M, F, and O. Here, the M is at least one element selected from the group consisting of Ca, Mg, Al, Y, and Zr. The sentence "the second solid electrolyte consists essentially of Li, Ti, M, F, and O" means that the molar ratio (i.e., molar fraction) of a sum of amounts of substance of Li, Ti, the M, F, and O to a sum of amounts of substance of all elements constituting the second solid electrolyte is 90% or more. In one example, the molar ratio may be 95% or more. The second solid electrolyte may consist only of Li, Ti, the M, F, and O.

The second solid electrolyte may include elements that are unavoidably mixed in. Examples of the elements include hydrogen and nitrogen.

The second solid electrolyte is obtained by coating the active material 110 with the first solid electrolyte, and then oxidizing a portion of the first solid electrolyte. In this case, except for oxygen, the compositions of the second solid electrolyte correspond to the compositions of the first solid electrolyte. In this method, the process of coating the active material 110 with the solid electrolyte is completed in a single step.

The composition of the second solid electrolyte for which oxygen is not taken into consideration may be different from the composition of the first solid electrolyte for which oxygen is not taken into consideration. The constituent elements of the second solid electrolyte other than oxygen may be different from the constituent elements of the first solid electrolyte other than oxygen. For example, the active material 110 is coated with a first solid electrolyte having a low proportion of the Ti-O bond, and the active material 110 is then coated with a second solid electrolyte having a high proportion of the Ti-O bond, so that a first layer 111 including the first solid electrolyte and a second layer 112 including the second solid electrolyte can be formed in this order on the active material 110.

It is desirable that the first solid electrolyte and the second solid electrolyte are free of sulfur. Such a sulfur-free solid electrolyte does not generate hydrogen sulfide even when exposed to the atmosphere, thereby exhibiting superior safety.

The coating layer 120 may coat only a portion of the surface of the particle of the active material 110. **In** this case, the particles of the active material 110 are in direct contact with each other through the portions not coated with the coating layer 120, thereby ensuring electron conductivity between the particles of the active material 110. Alternatively, the coating layer 120 may uniformly coat the surface of the particle of the active material 110.

The first layer 111 of the coating layer 120 may include a first solid electrolyte as its main component, or may include only the first solid electrolyte. The term "main component" means a component whose content is highest on a mass basis. The phrase "including only a first solid electrolyte" means that, except unavoidable impurities, no materials other than the first solid electrolyte are intentionally added.

The second layer 112 of the coating layer 120 may include a second solid electrolyte as its main component, or may include only the second solid electrolyte. The term "main component" means a component whose content is highest on a mass basis. The phrase "including only the second solid electrolyte" means that, except unavoidable impurities, no materials other than the second solid electrolyte are intentionally added.

The coating layer 120 has a thickness of desirably 1 nm or more and 500 nm or less, more desirably 1 nm or more and 100 nm or less, and further desirably 1 nm or more and 20 nm or less. When the thickness of the coating layer 120 is appropriately adjusted, contact between the active material 110 and the electrolytic solution can be sufficiently suppressed. The thickness of the coating layer 120 can be determined by thinning the coated active material 130 by any method such as ion milling, and observing the cross-section of the coated active material 130 with a transmission electron microscope. The average value of the thicknesses measured at any positions (for example, five points) can be considered as the thickness of the coating layer 120. Transmission electron microscopy observation allows identification of the position of the interface between the coating layer 120 and the active material 110 within the coated active material 130.

The active material 110 includes a material having properties of occluding and releasing metal ions such as lithium ions.

In the present embodiment, the active material 110 may be an oxide. The active material 110 may be an oxide free of Ti, except unavoidable impurities.

In the case where the active material 110 is a positive electrode active material, materials such as a lithium-containing transition metal oxide, a lithium-containing transition metal phosphate, a transition metal fluoride, a polyanion material, a fluorinated polyanion material, a transition metal sulfide, a transition metal oxysulfide, or a transition metal oxynitride can be used as the active material 110. In particular, in the case where a lithium-containing transition metal oxide or a lithium-containing transition metal phosphate is used as the active material 110, it is possible to reduce cost for manufacturing a battery and increase the average discharge voltage. Examples of the lithium-containing transition metal oxide include lithium cobalt oxide, lithium nickel cobalt aluminum oxide, lithium nickel cobalt manganese oxide, and lithium nickel manganese oxide. Examples of the lithium-containing transition metal phosphate include lithium iron phosphate, lithium vanadium phosphate, lithium cobalt phosphate, and lithium nickel phosphate.

The active material 110 may be a negative electrode active material. Examples of the negative electrode active material include lithium titanate, graphite, silicon, a silicon compound, and a Ni-Bi alloy.

The shape of the particle of the active material 110 is not limited to a particular one. The shape of the particle of the active material 110 can be the shape of a sphere, an ellipsoid, a flake, or a fiber.

FIG. 2 is a flow chart showing a method for manufacturing a coated active material 130. According to the manufacturing method of the present embodiment, the coated active material 130 can be efficiently produced.

In step S1, the active material 110 is coated with a solid electrolyte containing Li, Ti, and F. The solid electrolyte containing Li, Ti, and F is the first solid electrolyte.

A solid electrolyte containing Li, Ti, and F can be synthesized, for example, by the following method. First, raw material powders are mixed to obtain a solid electrolyte having a target composition. The raw material powders are, for example, fluorides of the respective elements. In the case where the target composition is Li_{2.7}Ti_{0.3}Al_{0.7}F₆, LiF, TiF₄, and AlF₃ are mixed in a molar ratio of 2.7:0.3:0.7. The raw material powders are then caused to react with each other by use of a mixing device such as a planetary ball mill. That is, the raw material powders are caused to react with each other by a mechanochemical milling method. This yields a solid electrolyte having the target composition.

The process of coating the active material 110 with the solid electrolyte is, for example, as follows. A powder of the active material 110 and a powder of a solid electrolyte are mixed in an appropriate ratio to obtain a mixture. The mixture is subjected to milling to provide mechanical energy to the mixture. Thereby, the active material 110 is coated with the solid electrolyte. A mixing machine such as a ball mill can be used for the milling. The milling may be performed in a dry and inert atmosphere to suppress oxidation of the materials.

In Step S2, a liquid containing oxygen is applied to the active material 110 coated with the solid electrolyte. The liquid containing oxygen is capable of oxidizing a portion of the solid electrolyte layer, thereby increasing the Ti-O bond. A portion of the solid electrolyte can be oxidized efficiently by performing a thermal treatment on the solid electrolyte in contact with the liquid containing oxygen.

The liquid containing oxygen includes, for example, water. Water can form a bond with Ti and efficiently oxidize the solid electrolyte through the thermal treatment. The liquid containing oxygen may be ethanol, N-methylpyrrolidone, or the like. The liquid containing oxygen may contain a plurality of components.

In Step S3, the active material 110 coated with the solid electrolyte is subjected to a thermal treatment to remove the liquid containing oxygen. This yields the coated active material 130 of the present embodiment.

The ambient temperature during the thermal treatment is, for example, 180°C or higher. At such a temperature, a portion of the solid electrolyte layer can be efficiently oxidized. The upper limit of the ambient temperature during the thermal treatment is not particularly limited and is, for example, 300°C.

### (Embodiment 2)

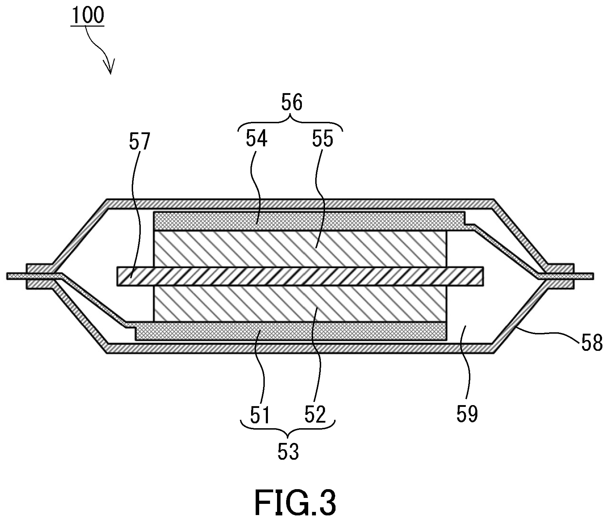

FIG. 3 is a schematic cross-sectional view of a lithium secondary battery according to Embodiment 2 of the present disclosure. A lithium secondary battery 100 includes a positive electrode 53, a negative electrode 56, an electrolyte layer 57, an outer casing 58, and a non-aqueous electrolytic solution 59. The positive electrode 53 includes a positive electrode current collector 51 and a positive electrode active material layer 52. The positive electrode active material layer 52 is provided on the positive electrode current collector 51. The negative electrode 56 includes a negative electrode current collector 54 and a negative electrode active material layer 55. The negative electrode active material layer 55 is provided on the negative electrode current collector 54. The electrolyte layer 57 is placed between the positive electrode 53 and the negative electrode 56. The electrolyte layer 57 is a separator. The positive electrode 53, the negative electrode 56, the electrolyte layer 57, and the non-aqueous electrolytic solution 59 are enclosed within the outer casing 58.

The positive electrode 53 or the negative electrode 56 includes the coated active material 130 of Embodiment 1. Specifically, either the positive electrode active material layer 52 or the negative electrode active material layer 55 contains the coated active material 130 of Embodiment 1. The coated active material 130 exhibits excellent durability against the non-aqueous electrolytic solution 59, thereby improving the output characteristics of the lithium secondary battery 100.

The coated active material 130 is typically included in the positive electrode 53.

The positive electrode current collector 51 is a foil made of, for example, a metal material such as aluminum, stainless steel, titanium, or an alloy thereof. The negative electrode current collector 54 is a foil made of, for example, a metal material such as stainless steel, nickel, copper, or an alloy thereof.

The positive electrode active material layer 52 and the negative electrode active material layer 55 may include a conductive additive, an ion conductor, a binder, or the like.

The non-aqueous electrolytic solution 59 is impregnated into the positive electrode 53, the negative electrode 56, and the electrolyte layer 57. The non-aqueous electrolytic solution 59 may also fill the internal space of the outer casing 58.

The non-aqueous electrolytic solution 59 includes a non-aqueous solvent and a lithium salt.

Examples of the non-aqueous solvent include a cyclic carbonate ester, a chain carbonate ester, an ester, a cyclic ether, a chain ether, a nitrile, an amide, a lactone, or the like. Any one non-aqueous solvent selected from these examples may be used, or two or more thereof may be combined in use. Examples of solvents with a high oxygen content include lactones. A specific example of lactone is γ-butyrolactone. In the case where lactones are included in the electrolytic solution, the coated active material 130 of the present disclosure can exhibit higher effectiveness. The term "lactone" means a compound having a lactone ring. A lactone ring means a heterocyclic ring including an ester group within its ring.

Examples of the lithium salt include lithium hexafluorophosphate (LiPF₆), lithium tetrafluoroborate (LiBF₄), lithium perchlorate (LiClO₄), lithium bis(fluorosulfonyl)imide (LiFSI), lithium bis(trifluoromethanesulfonyl)imide (LiTFSI), lithium bis(perfluoroethylsulfonyl)imide (LiN(SO₂C₂F₅)₂), LiAsF₆, LiCF₃SO₃, and lithium difluoro(oxalato)borate. Any one electrolyte salt selected from these examples may be used, or two or more thereof may be combined in use.

The electrolyte layer 57 has lithium ion conductivity. The material of the electrolyte layer 57 is not particularly limited as long as lithium ion passage is permitted. The material of the electrolyte layer 57 may be at least one selected from the group consisting of a solid electrolyte, a gel electrolyte, an ion exchange resin membrane such as a lithium cation exchange resin, a semipermeable membrane, and a porous membrane. An electrolyte layer 57 made from any of these materials can sufficiently ensure the safety of the lithium secondary battery 100. Examples of the solid electrolyte include a sulfide solid electrolyte such as Li₂S-P₂S₅, and an oxide solid electrolyte such as Li₇La₃Zr₂O₁₂ (LLZ). Examples of the gel electrolyte include a gel electrolyte including a fluororesin such as PVdF. Examples of the ion exchange resin membrane include a cation exchange membrane and an anion exchange membrane. Examples of the porous membrane include a porous membrane made of polyolefin resin and a porous membrane made of glass paper obtainable by weaving glass fibers into a nonwoven fabric. The electrolyte layer 57 has a thickness of, for example, 0.001 µm or more and 500 µm or less.

The shape of the lithium secondary battery 100 is not particularly limited. The lithium secondary battery 100 may be in a variety of shapes, such as a coin type, a cylindrical type, a square type, a sheet type, a button type, a flat type, or a laminated type.

The lithium secondary battery 100 may be a solid-state battery that does not use a non-aqueous electrolytic solution. Even in such a solid-state battery, the coated active material 130 may deteriorate due to other materials such as the solid electrolyte. Suppressing deterioration of the coated active material 130 improves the output characteristics of the lithium secondary battery.

### (Other embodiments)

### (Appendix)

The following techniques are disclosed by the embodiments of the above description.

### (Technique 1)

A coated active material including:
an active material; and
a coating layer coating at least a portion of a surface of the active material, wherein
the coating layer includes a first layer including a first solid electrolyte and a second layer including a second solid electrolyte,
the first layer is positioned between the second layer and the active material,
the first solid electrolyte contains Li, Ti, and F,
the second solid electrolyte contains Li, Ti, F, and O, and
a proportion of a Ti-O bond in a group of bonds to Ti contained in the second solid electrolyte is higher than a proportion of the Ti-O bond in the group of bonds to Ti contained in the first solid electrolyte.

The coated active material of the present disclosure is resistant to deterioration during charge and discharge of a battery, and is capable of improving the output characteristics of the battery.

### (Technique 2)

The coated active material according to Technique 1, wherein the proportion of the Ti-O bond is higher than 5% in the second solid electrolyte. By increasing the proportion of the Ti-O bond in the second solid electrolyte to be higher than 5%, the coated active material with a coating layer resistant to deterioration is obtained.

### (Technique 3)

The coated active material according to Technique 1 or 2, wherein a sum of a proportion of a Ti-F bond and a proportion of a Ti-O-F bond is 63% or higher. With this configuration, the coating layer tends to have a high ion conductivity.

### (Technique 4)

The coated active material according to any one of Techniques 1 to 3, wherein the first solid electrolyte and the second solid electrolyte each further contain at least one element selected from the group consisting of Ca, Mg, Al, Y, and Zr. The inclusion of these elements can improve the ionic conductivity of the first solid electrolyte.

### (Technique 5)

The coated active material according to any one of Techniques 1 to 4, wherein the second layer is a layer including an outermost surface of the coated active material. This configuration effectively suppresses the deterioration of the coating layer, the deterioration being caused by a reaction with the electrolytic solution during charge and discharge of a battery.

### (Technique 6)

The coated active material according to any one of Techniques 1 to 5, wherein the first layer is a layer present in a region at a distance of 1 nm or more from the outermost surface of the coated active material. This configuration effectively suppresses the deterioration of the coating layer, the deterioration being caused by a reaction with the electrolytic solution during charge and discharge of a battery.

### (Technique 7)

The coated active material according to any one of Techniques 1 to 6, wherein the coating layer has a thickness of 1 nm or more and 500 nm or less. When the thickness of the coating layer is appropriately adjusted, contact between the active material and the electrolytic solution can be sufficiently suppressed.

### (Technique 8)

A coated active material including:
an active material; and
a coating layer coating at least a portion of a surface of the active material, wherein
a proportion of a Ti-O bond in a group of bonds to Ti contained in an outermost surface of the coated active material is higher than a proportion of a Ti-O bond in the group of bonds to Ti contained in the coating layer at an intermediate position between the outermost surface and the surface of the active material.

The coated active material of the present disclosure is resistant to deterioration during charge and discharge of a battery and is capable of improving the output characteristics of the battery.

### (Technique 9)

The coated active material according to Technique 8, wherein the coating layer has a portion closer to the outermost surface and a portion constituting an interface between the coating layer and the active material, with reference to the intermediate position, and a proportion of the Ti-O bond in the group of bonds to Ti contained in the portion closer to the outermost surface is higher than the proportion of the Ti-O bond in the group of bonds to Ti contained in the portion constituting the interface. This configuration makes the coating layer more resistant to deterioration during charge and discharge of the battery.

### (Technique 10)

The coated active material according to Technique 8 or 9, wherein the proportion of the Ti-O bond is higher than 5% at the outermost surface. By increasing the proportion of the Ti-O bond at the outermost surface to be higher than 5%, a coated active material with a coating layer resistant to deterioration is obtained.

### (Technique 11)

The coated active material according to any one of Techniques 8 to 10, wherein a sum of a proportion of a Ti-F bond and a proportion of a Ti-O-F bond is 63% or more at the intermediate position. With this configuration, the coating layer tends to exhibit a high ion conductivity.

### (Technique 12)

The coated active material according to any one of Techniques 8 to 11, wherein the coating layer further contains at least one element selected from the group consisting of Ca, Mg, Al, Y, and Zr. Containing these elements can improve the ionic conductivity of the coating layer.

### (Technique 13)

An electrode including the coated active material according to any one of Techniques 1 to 12. The coated active material exhibits excellent durability against the electrolytic solution, thereby improving the output characteristics of the battery.

### (Technique 14)

A battery including the electrode according to Technique 13. The coated active material exhibits excellent durability against the electrolytic solution, thereby improving the output characteristics of the battery.

### (Technique 15)

The battery according to Technique 14, further including an electrolytic solution containing a lactone. In the case where the electrolytic solution contains lactones, the coated active material of the present disclosure can exhibit higher effectiveness.

### (Technique 16)

A method for manufacturing a coated active material, including:
coating an active material with a solid electrolyte containing Li, Ti, and F;
applying a liquid containing oxygen to the active material coated with the solid electrolyte; and
subjecting the active material coated with the solid electrolyte to a thermal treatment to remove the liquid.

According to the manufacturing method of the present disclosure, a coated active material can be efficiently manufactured.

### (Technique 17)

The method according to Technique 16, wherein the liquid includes water. The water forms bonds with Ti and F, and is capable of efficiently oxidizing the solid electrolyte through the thermal treatment.

### (Technique 18)

The method according to Technique 16 or 17, wherein an ambient temperature during the thermal treatment is 180°C or higher. At such temperatures, a portion of the solid electrolyte layer can be efficiently oxidized.

### EXAMPLES

Hereinafter, the details of the present disclosure will be described using an example and a comparative example. The present disclosure is not limited to the following examples.

### (Example 1)

### [Production of fluoride solid electrolyte]

LiF, TiF₄, and AlF₃ each being raw material powders were weighed in an argon atmosphere having a dew point of -60°C or lower so that the molar ratio would be LiF:TiF₄:AlF₃ = 2.7:0.3:0.7. These powders were put into a 45 cc pod of a planetary ball mill together with a 0.5 mm-diameter ball (25 g). γ-Butyrolactone (GBL) as an organic solvent was dropped into the pod so that a solids rate would be 50 mass%. The solids rate is calculated by {(the mass of the raw materials)/(the mass of the raw materials + the mass of the solvent)} × 100. The mixture was subjected to milling using the planetary ball mill for 12 hours at 500 rpm. After the milling, the ball was removed to obtain a slurry. The slurry was dried with a mantle heater under a nitrogen flow at 200°C for one hour. The resulting solid was crushed in a mortar to give a powder of a fluoride solid electrolyte. The fluoride solid electrolyte had a composition represented by Li_{2.7}Ti_{0.3}Al_{0.7}F₆ (hereinafter referred to as "LTAF").

### [Production of coated active material]

A powder of LiCoO₂ (hereinafter referred to as "LCO") was prepared as the positive electrode active material. Next, a coating layer formed from the LTAF was formed on the surface of the LCO. The coating layer was formed by compression shearing using a composite particle forming machine (NOB-MINI, manufactured by HOSOKAWA MICRON CORPORATION). Specifically, the LCO and the LTAF were weighed so that the volume ratio between the LCO and the LTAF would be 100:3. Processing was performed under the following conditions: blade clearance: 2 mm, rotational speed: 6000 rpm, processing time: 30 min. This yielded the LCO coated with the LTAF. The thickness of the coating layer was measured using the method described earlier. The thickness of the coating layer was 25 nm.

The LCO coated with LTAF was mixed with water and kneaded for 1 hour. The mass ratio of the LCO coated with LTAF to water was (LTAF-coated LCO):water = 10:1. Subsequently, the LCO coated with LTAF was subjected to a thermal treatment at an ambient temperature of 200°C for 24 hours. This yielded the coated active material of Example 1.

### (Comparative Example 1)

The coated active material of Comparative Example 1 was produced by the same method as in Example 1, except that the step of mixing with water and the step of thermal treatment were omitted.

### [XPS measurement for coated active material]

XPS measurement was performed for the coated active materials of Example 1 and Comparative Example 1 under the following conditions. In the XPS measurement, Quantera SXM (manufactured by ULVAC-PHI INC.) was used. The measurement conditions were as follows.
X-ray source: Al monochromatic (25 W, 15 kV)
Electron-ion neutralization gun: ON
Photoelectron take-off angle: 45 degrees

Ti was selected as the element to be measured, and the scanning range of binding energy was set to 450 eV to 480 eV (Ti2p orbital). Peak separation was performed for an XPS spectrum in the range from 455 eV to 486 eV, and the area of each peak was calculated. Specifically, the spectrum was divided to separate a peak attributed to a Ti-F bond, a peak attributed to a Ti-O-F bond, and a peak attributed to a Ti-O bond, and the area (integrated peak area) of each peak was calculated. A proportion (unit: %) of the area of a peak attributed to a Ti-O bond to a sum of the areas of the peaks was calculated. A proportion (unit: %) of the area of a peak attributed to a Ti-O-F bond to a sum of the areas of the peaks was calculated. A proportion (unit: %) of the area of a peak attributed to a Ti-F bond to a sum of the areas of the peaks was calculated. In analysis of the XPS spectrum, peak fitting was performed with the Gaussian-Lorentzian function.

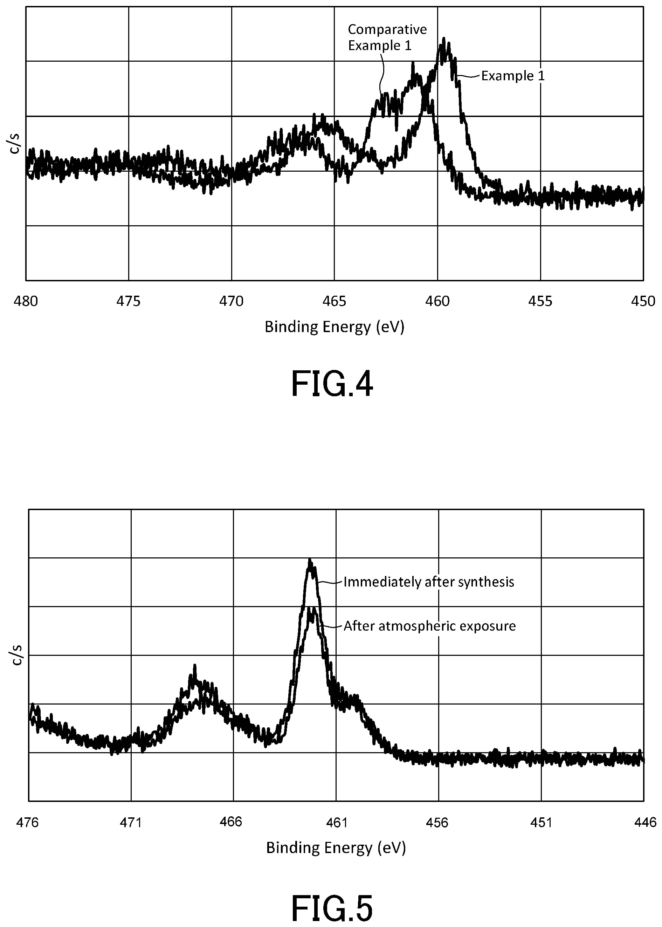

FIG. 4 shows the XPS spectra of the outermost surface of the coated active materials in Example 1 and Comparative Example 1.

After performing the XPS measurement for the outermost surfaces of the coated active materials in Example 1 and Comparative Example 1, the surface layers of the coated active materials were removed by argon sputtering. Subsequently, XPS measurements were performed again. By repeating the argon sputtering and the XPS measurement, the XPS measurement was performed at depths of 1 nm, 3 nm, 5 nm, 10 nm, 15 nm, 20 nm, and 25 nm from the outermost surface. The results are shown in Table 1.

**[Table 1]**

| | Example 1 | | Comparative Example 1 | |
|---|---|---|---|---|
| Depth from outermost surface [nm] | Ti-O bond (%) | Sum of Ti-O-F bond and Ti-F bond (%) | Ti-O bond (%) | Sum of Ti-O-F bond and Ti-F bond (%) |
| 0 | 80 | 20 | 5 | 95 |
| 1 | 37 | 63 | 15 | 85 |
| 3 | 36 | 64 | 15 | 85 |
| 5 | 37 | 63 | 22 | 78 |
| 10 | 34 | 66 | 33 | 67 |
| 15 | 32 | 68 | 41 | 59 |
| 20 | 34 | 66 | 54 | 46 |
| 25 | 25 | 75 | 63 | 37 |

As shown in Table 1, the proportion of the Ti-O bond at the outermost surface of the coated active material in Example 1 was considerably as high as 80%. The proportion of the Ti-O bond at the outermost surface of the coated active material in Comparative Example 1 was as low as 5%. The Ti-O bond at the outermost surface of the coated active material in Comparative Example 1 is presumed to originate from natural oxidation.

Since the active material is an oxide, Ti-O bonds were observed at depths ranging from 1 nm to 25 nm in both Example 1 and Comparative Example 1. That is, it is presumed that a Ti-O bond is formed since the LTAF particle is strongly pressed onto the surface of the LCO particle during the preparation of the coated active material. The proportion of the Ti-O bond at the outermost surface of the coated active material in Comparative Example 1 was lower than the proportion of the Ti-O bond at the depth positions of 1 nm, 3 nm, and 5 nm. In contrast, the proportion of the Ti-O bond at the outermost surface of the coated active material in Example 1 was significantly higher than the proportion of the Ti-O bond at the depths of 1 nm, 3 nm, and 5 nm. The proportion of the Ti-O bond at the outermost surface of the coated active material in Example 1 was twice or even higher than the proportion of the Ti-O bond at the depth of 1 nm. Therefore, in Example 1, the interface between the first layer and the second layer is present in the region distanced by less than 1 nm from the outermost surface of the coated active material, and the thickness of the second layer in Example 1 is less than 1 nm. The proportions of the Ti-O bond at the depths of 1 nm, 3 nm, and 5 nm in Example 1 were higher than the proportions of the Ti-O bond at the depths of 1 nm, 3 nm, and 5 nm in Comparative Example 1. Note that the depth of 25 nm is based on an observation of the vicinity of the interface between the coating layer and the active material.

### [Production of lithium secondary battery]

The coated active material of Example 1, acetylene black as a conductive additive, polytetrafluoroethylene as a binder, and a solvent were mixed to obtain a positive electrode compound paste. The ratio of the coated active material, the acetylene black, and the polytetrafluoroethylene, based on mass, was as follows: coated active material: acetylene black: polytetrafluoroethylene = 90:5:5. The positive electrode compound was obtained by drying the positive electrode compound paste.

A pellet (diameter: 10 mm) was obtained by pressing 100 mg of the positive electrode compound at a pressure of 10 kN/cm². The pellet was dried at 200°C, whereby a positive electrode of Example 1 was obtained.

The positive electrode of Example 1, a polypropylene nonwoven fabric, and a negative electrode were placed in this order inside a coin case. Into the coin case, 90 mg of electrolytic solution was injected. The coin case was sealed with a lid to obtain a lithium secondary battery of Example 1. The electrolytic solution was prepared by dissolving lithium borofluoride (LiBF₄) in γ-butyrolactone. The concentration of the lithium borofluoride in the electrolytic solution was 1.0 mol/L. Metal Li was used as the negative electrode.

A lithium secondary battery of Comparative Example 1 was prepared by the same method as in Example 1 except that the coated active material of Comparative Example 1 was used instead of the coated active material of Example 1.

### [Charge-discharge test]

Charge-discharge tests were performed on the lithium secondary batteries of Example 1 and Comparative Example 1 by the following procedure. At an ambient temperature of 25°C, constant-current charge was performed at a current value of 0.02C until the voltage reached 4.5 V. After a one-hour rest period, a constant-current discharge was performed at a current rate of 2C until the voltage reached 3.0 V, and the initial discharge capacity was measured. Table 1 shows the 2C discharge capacity of the lithium secondary batteries of Example 1 and Comparative Example 1. The 2C discharge capacity shown in Table 1 is the discharge capacity per unit mass of the coated active material.

**[Table 2]**

| | 2C discharge capacity (mAh/g) |
|---|---|
| Example 1 | 88.8 |
| Comparative Example 1 | 80.7 |

As shown in Table 2, the discharge capacity at the 2C rate of the lithium secondary battery of Example 1 significantly exceeded the discharge capacity at the 2C rate of the lithium secondary battery of Comparative Example 1.

### (Reference Example)

XPS measurement was performed immediately after synthesis and after 7 days of atmospheric exposure of the LTAF used for producing the coated active material. The results are shown in FIG. 5.

As can be understood from the two spectra shown in FIG. 5, the change in the LTAF spectrum before and after 7 days of atmospheric exposure was minimal. That is, the changes due to oxidation treatment using water and heat, as in Example 1, are significantly different from the changes due to atmospheric exposure. It is predicted that, even if the solid electrolyte of Comparative Example 1 was exposed to the atmosphere for an extended period, the proportion of the Ti-O bond would not change significantly from the value shown in Table 1 (5%).

### INDUSTRIAL APPLICABILITY

The techniques disclosed herein are useful for coating an active material to be used in a battery.

## Claims

1. A coated active material comprising:
an active material; and
a coating layer coating at least a portion of a surface of the active material, wherein
the coating layer comprises a first layer comprising a first solid electrolyte and a second layer comprising a second solid electrolyte,
the first layer is positioned between the second layer and the active material,
the first solid electrolyte contains Li, Ti, and F,
the second solid electrolyte contains Li, Ti, F, and O, and
a proportion of a Ti-O bond in a group of bonds to Ti contained in the second solid electrolyte is higher than a proportion of the Ti-O bond in the group of bonds to Ti contained in the first solid electrolyte.

2. The coated active material according to claim 1, wherein
the proportion of the Ti-O bond is higher than 5% in the second solid electrolyte.

3. The coated active material according to claim 1, wherein
a sum of a proportion of a Ti-F bond and a proportion of a Ti-O-F bond is 63% or higher.

4. The coated active material according to claim 1, wherein
the first solid electrolyte and the second solid electrolyte each further contain at least one element selected from the group consisting of Ca, Mg, Al, Y, and Zr.

5. The coated active material according to claim 1, wherein
the second layer is a layer including an outermost surface of the coated active material.

6. The coated active material according to claim 1, wherein
the first layer is a layer present in a region at a distance of 1 nm or more from the outermost surface of the coated active material.

7. The coated active material according to claim 1,wherein
the coating layer has a thickness of 1 nm or more and 500 nm or less.

8. A coated active material comprising:
an active material; and
a coating layer coating at least a portion of a surface of the active material, wherein
a proportion of a Ti-O bond in a group of bonds to Ti contained in an outermost surface of the coated active material is higher than a proportion of a Ti-O bond in the group of bonds to Ti contained in the coating layer at an intermediate position between the outermost surface and the surface of the active material.

9. The coated active material according to claim 8, wherein
the coating layer has a portion closer to the outermost surface and a portion constituting an interface between the coating layer and the active material, with reference to the intermediate position, and
a proportion of the Ti-O bond in the group of bonds to Ti contained in the portion closer to the outermost surface is higher than the proportion of the Ti-O bond in the group of bonds to Ti contained in the portion constituting the interface.

10. The coated active material according to claim 8, wherein
the proportion of the Ti-O bond is higher than 5% at the outermost surface.

11. The coated active material according to claim 8, wherein
a sum of a proportion of a Ti-F bond and a proportion of a Ti-O-F bond is 63% or more at the intermediate position.

12. The coated active material according to claim 8, wherein
the coating layer further contains at least one element selected from the group consisting of Ca, Mg, Al, Y, and Zr.

13. An electrode comprising the coated active material according to any one of claims 1 to 12.

14. A battery comprising the electrode according to claim 13.

15. The battery according to claim 14, further comprising an electrolytic solution containing a lactone.

16. A method for manufacturing a coated active material, comprising:
coating an active material with a solid electrolyte containing Li, Ti, and F;
applying a liquid containing oxygen to the active material coated with the solid electrolyte; and
subjecting the active material coated with the solid electrolyte to a thermal treatment to remove the liquid.

17. The method according to claim 16, wherein
the liquid comprises water.

18. The method according to claim 16, wherein
an ambient temperature during the thermal treatment is 180°C or higher.
